## Europäisches Patentamt

## European Patent Office

## Office européen des brevets

(19)

(11) Veröffentlichungsnummer: **0 131 320**
**A1**

(12) **EUROPÄISCHE PATENTANMELDUNG**

(21) Anmeldenummer: **84200815.3**

(22) Anmeldetag: **08.06.84**

(51) Int. Cl.⁴: **G 06 K 15/12**
**H 04 N 1/036**

(30) Priorität: **13.06.83 DE 3321346**

(43) Veröffentlichungstag der Anmeldung:
**16.01.85 Patentblatt 85/3**

(84) Benannte Vertragsstaaten:
**DE FR GB SE**

(71) Anmelder: **Philips Patentverwaltung GmbH**
**Billstrasse 80**
**D-2000 Hamburg 28(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**FR GB SE**

(72) Erfinder: **Hill, Bernhard, Dr.-Ing. Dipl.-Ing.**
**Paul-Sorge-Strasse 142b**
**D-2000 Hamburg 71(DE)**

(74) Vertreter: **Nehmzow-David, Fritzi-Maria et al,**
**Philips Patentverwaltung GmbH Billstrasse 80 Postfach**
**10 51 49**
**D-2000 Hamburg 28(DE)**

(54) **Optischer Druckkopf sowie Drucker mit einem derartigen Druckkopf.**

(57) Die Erfindung betrifft einen optischen Druckkopf, bei dem entlang einer Zeile gruppenweise Lichtschaltelemente (4) angeordnet sind, deren gegenseitiger äquidistanter Abstand (a) innerhalb einer Gruppe (2a, 2b, 2c) von demjenigen Abstand zweier benachbarter Lichtschaltelemente nebeneinanderliegender Gruppen verschieden ist, und der ein Abbildungssystem (6) zur zeilenförmigen Abbildung der Lichtschaltelemente auf einen lichtempfindlichen Aufzeichnungsträger (5) besitzt. Zwischen den Lichtschaltelementen (4) und dem Abbildungssystem (6) ist eine Lichtleiterplatte (7) mit einer der Anzahl der Lichtschaltelemente (4) entsprechenden Anzahl von lichtleitenden Kanälen (8) angeordnet, von denen jeweils einer mit seiner Lichtkanal-Eintrittsfläche (9) einem Lichtschaltelement gegenüberliegt, während die Lichtkanal-Austrittsflächen (10) untereinander einen äquidistanten Abstand (L) besitzen.

FIG.2

Optischer Druckkopf sowie Drucker mit einem derartigen
Druckkopf

Die Erfindung betrifft einen optischen Druckkopf, mit
entlang einer Zeile gruppenweise angeordneten Lichtschaltelementen, deren gegenseitiger äquidistanter Abstand
innerhalb einer Gruppe von demjenigen Abstand zweier benachbarter Lichtschaltelemente nebeneinander liegender
Gruppen verschieden ist, und mit einem Abbildungssystem zur
zeilenförmigen Abbildung der Lichtschaltelemente auf einen
lichtempfindlichen Aufzeichnungsträger.

Ferner betrifft die Erfindung einen optischen Drucker mit
einem derartigen optischen Druckkopf.

Optische Drucker sind bereits allgemein bekannt, beispielsweise aus der DE-OS 28 12 206, und im Prinzip in Fig. 1
dargestellt. Als Lichtschaltelemente können magneto-optische Schaltelemente benutzt werden, deren Aufbau und Wirkungsweisen bereits aus der DE-OS 26 06 596 bekannt sind.
Andere optische Druckköpfe enthalten Zeilen von Lichtschaltelementen, die aus Flüssigkristall-Elementen aufgebaut
sind. Eine noch andere Technik benutzt zum Aufbau von Lichtschaltelementen keramische elektro-optische Materialien, wie
z.B. PLZT. Darüber hinaus sind auch optische Druckköpfe
bekannt, bei denen die Lichtschaltelemente aus lichtemittierenden Dioden bestehen, wobei jeweils eine Anzahl von
Dioden integriert auf einem Substrat zeilenförmig angeordnet
sind.

Angewendet werden optische Druckköpfe z.B. in elektrofotografischen Druckern zur zeilenweisen Belichtung eines
optisch empfindlichen Aufzeichnungsträgers oder Zwischenträgers, von dem dann z.B. durch ein fotografisches Verfahren oder im Falle der Elektro-Fotografie durch ein
elektrofotografisches Verfahren ein optisches Bild hergestellt wird. Insbesondere elektrofotografische Drucker
besitzen eine steigende Bedeutung für die Druck- und Bürotechnik zur Erzeugung von Text oder Grafik hoher Qualität
auf Normalpapier.

Grundsätzlich wird bei optischen Druckköpfen eine möglichst
hohe Dichte von elektronisch individuell schaltbaren Lichtpunkten angestrebt, um damit die Bildqualität zu erhöhen.
Für die Anwendung in elektrofotografischen Druckern strebt
man mindestens zehn Lichtpunkte pro Millimeter an.

Verwendet man Lichtschaltelemente bzw. Lichtschaltmasken in
einer Festkörpertechnik, wie sie in der DE-OS 28 12 206
näher beschrieben ist, oder integrierte Leuchtdioden-Zeilen,
dann kann die Lichtpunktdichte zwar die erforderliche Größe
erreichen, jedoch ist der absoluten Länge einer Lichtschaltzeile eine Grenze durch die Herstellungstechnologie
gesetzt. Beispielsweise werden die oben beschriebenen
magneto-optischen Lichtschaltmasken wie auch die Leuchtdioden-Zeilen mittels einer fotolithografischen Maskentechnik hergestellt. Sie können daher nur Längen von maximal
einigen Zentimetern erreichen. Realisiert sind z.B. Lichtschaltmasken nach dem magneto-optischen Prinzip, die bis zu
512 Lichtschaltelemente integriert auf einem Träger
enthalten bei einer Dichte von 16 Schaltelementen pro Millimeter. Auch Lichtpunktdichten von 20 Lichtschaltelementen
pro Millimeter sind mit der heutigen Technik ohne Schwierigkeiten herzustellen. Darüber hinaus sind bereits Leuchtdioden-Zeilen mit bis zu 128 Leuchtdioden auf einem Substrat
erhältlich.

Für die Belichtung einer Zeile auf einer Papierseite vom Format DIN A4 in einem optischen Drucker ist dann ein modulartiges Aneinandersetzen von mehreren solcher Lichtschaltmasken mit jeweils einer Zeile von Lichtschaltelementen erforderlich.

Wie bereits in der deutschen Patentanmeldung P 32 24 356.1 beschrieben, können diese Lichtschaltelemente bzw. Lichtschaltmasken mit Hilfe von speziell dimensionierten, entlang einer Zeile angeordneten selbstfokussierenden Linsen (Selfoc-Linsen) auf einen lichtempfindlichen Aufzeichnungsträger abgebildet werden. Derartige Linsen bestehen aus einem Glaszylinder, in dem ein konzentrischer Brechnungsindexgradient vorhanden ist. Durch diesen Brechnungsindexgradienten wird eine lichtfokussierende Wirkung erzielt, die zur Abbildung der Lichtschaltelemente ausgenutzt wird. Ein derartiges Abbildungssystem besitzt gegenüber Objektiven mit konventionellen Linsen den Vorteil eines kompakteren Aufbaues, so daß optische Druckköpfe wesentlich geringerer Abmessungen herstellbar sind, und ist darüber hinaus billiger und leichter montierbar als konventionelle Systeme.

Bei der Abbildung der Lichtschaltelemente mit derartigen Selfoc-Linsen in die Aufzeichnungsebene muß jedoch berücksichtigt werden, daß der Abstand zwischen den einzelnen Lichtschaltelementen einer Lichtschaltmaske (Gruppe von Lichtschaltelementen) in Zeilenrichtung kleiner ist als derjenige Abstand zweier benachbarter Lichtschaltelemente nebeneinanderliegender Lichtschaltmasken. Dies hängt damit zusammen, daß die integrierten Lichtschaltmasken bzw. Leuchtdioden-Zeilen aus größeren Substraten herausgesägt werden müssen und wegen der auftretenden Kantenausbrüche beim Sägen ein Mindestabstand von der Sägekante zu den aktiven Lichtschaltelementen der Zeile notwendig ist, der in der Praxis mehr als der mittlere Abstand der Lichtschaltelemente beträgt.

Um gleiche Abstände der abgebildeten Lichtschaltelemente in der Aufzeichnungsebene entlang der gesamten Zeile zu erhalten, ist daher vorgesehen worden, die Lichtschaltelemente in Gruppen aufzuteilen und jeweils einer Gruppe eine Selfoc-Linse zuzuordnen, wobei die Selfoc-Linse eine vergrößerte Abbildung durchführt. Auf diese Weise wird der mittlere Abstand zwischen den Lichtschaltelementen einer Gruppe vergrößert, so daß letztlich die in der Aufzeichnungsebene abgebildeten Lichtschaltelemente untereinander entlang der gesamten Zeile einen gleichen Abstand aufweisen.

Bei dieser Art der Abbildung ist es somit erforderlich, die Lichtschaltelemente in relativ kleinen Gruppen zusammenzufassen, da eine von einer Linse abgebildete Gruppe jeweils innerhalb der Linsenöffnung angeordnet sein muß. Dies führt zu einer nur unvollständigen Belegung der Zeile mit Lichtschaltelementen, so daß auch die Dichte der abgebildeten Lichtschaltelemente in der Aufzeichnungsebene relativ gering ist. Darüber hinaus müssen bei der genannten Abbildung Selfoc-Linsen benutzt werden, die eine vergrößerte Abbildung durchführen, so daß ein gleiches Rastermaß der abgebildeten Lichtschaltelemente erreicht wird. Derartige Linsen sind relativ teuer, da es sich bei ihnen um Spezialanfertigungen handelt.

Demgegenüber ist es Aufgabe der Erfindung, einen optischen Druckkopf zu schaffen, der eine erhöhte Belegung der Zeile mit Lichtschaltelementen aufweist, die von einem kompakten Abbildungssystem in die Aufzeichnungsebene abgebildet werden, das keine bildvergrößernden Linsen besitzen muß.

Diese Aufgabe wird erfindungsgemäß dadurch gelöst, daß zwischen den Lichtschaltelmenten und dem Abbildungssystem eine Lichtleiterplatte mit einer der Anzahl der Lichtschaltelemente entsprechenden Anzahl von lichtleitenden Kanälen angeordnet ist, von denen jeweils einer mit seiner Lichtkanal-Eintrittsfläche einem Lichtschaltelement gegenüberliegt, während die Lichtkanal-Austrittsflächen untereinander einen äquidistanten Abstand besitzen.

Durch die Lichtleiterplatte zwischen den Lichtschaltelementen und dem Abbildungssystem wird erreicht, daß die auf
einer Lichtschaltmaske befindlichen Lichtschaltelemente
nicht mehr gruppenweise angeordnet zu werden brauchen. Vielmehr kann die Zeile dieser Lichtschaltmaske kontinuierlich
mit Lichtschaltelementen belegt sein, so daß eine relativ
hohe Belegungsdichte erzielt wird. Die lichtleitenden Kanäle
innerhalb der Lichtleiterplatte sind dabei so angeordnet,
daß sie das aus den einzelnen Lichtschaltelementen aller
Lichtschaltmasken der genannten Zeile kommende Licht aufnehmen und an ihrer Ausgangsseite, also der Ausgangsseite
der Lichtleiterplatte, unter gleichen in Richtung der Zeile
liegenden Abständen wieder abgeben. Dabei sind die unterschiedlichen Abstände zwischen den Lichtschaltelementen
einer Lichtschaltmaske einerseits und den benachbarten
Lichtschaltelementen unterschiedlicher Lichtschaltmasken
andererseits durch den besonderen Verlauf der lichtleitenden Kanäle innerhalb der Lichtleiterplatte ausgeglichen. Da
die Austrittsflächen der lichtleitenden Kanäle in Zeilenrichtung den gleichen Abstand aufweisen, ist zu diesem Zweck
eine vergrößernde Abbildung durch das nachfolgende Abbildungssystem nicht mehr erforderlich. Selbstverständlich kann
das Abbildungssystem aber dennoch vergrößert abbilden, um
beispielsweise in der Aufzeichnungsebene vergrößerte Lichtpunkte zu erzeugen.

Nach einer vorteilhaften Ausbildung der Erfindung besteht
die Lichtleiterplatte aus einer Rillenplatte, in deren
Rillen Lichtleitfasern aus Glas oder Kunststoff als lichtleitende Kanäle eingelegt sind. Die Lichtleiterplatte kann
als lichtleitende Kanäle aber auch innenverspiegelte Hohlkanäle besitzen, die durch eine Spiegelplatte abgedeckt
sind.

Die Realisierung von Lichtleiterplatten mit derart ausgebildeten lichtleitenden Kanälen ist fertigungstechnisch relativ
einfach und daher kostengünstig, da die Lichtleiterplatte
selbst z.B. aus Kunststoff bestehen kann, in den die Rillen
bzw. die Hohlkanäle eingepreßt sind. Insoweit liegt hier ein
Bauelement vor, das in einfacher Weise in großen Stückzahlen
produziert werden kann, und das darüber hinaus leicht
montierbar ist.

Es ist auch möglich, die Lichtleitkanäle aus einem optisch
transparenten Material mit einem Brechungsindex $n_2$ auf einer
dielektrischen Grundplatte (z.B. Glas) mit dem Brechungsindex $n_1 < n_2$ herzustellen derart, daß die Lichtleitkanäle
als Replica, also als Abdruck einer Reliefmaske entstehen.
Durch den Brechungsindexsprung $n_1 < n_2$ entsteht Totalreflexion, also Lichtleitung. Besonders geeignet hierfür ist
z.B. die Anwendung von fotopolymerisierenden Lacken, die
unter UV-Bestrahlung aushärten und sich dabei der äußeren
vorgegebenen Form anpassen.

Andere vorteilhafte Ausbildungen der Erfindung beziehen sich
auf Lichtleiterplatten, die entweder aus einem Substrat bestehen, in das die Rillen bzw. Hohlkanäle auf fotolithografischem Wege durch Ätzen, oder in das die lichtleitenden
Kanäle durch Diffusion eines Materials mit hohem Brechungsindex eingebracht sind. Im letzteren Fall werden besonders
robuste, lediglich einstückige Lichtleiterplatten erhalten.

Nach einer anderen vorteilhaften Ausbildung der Erfindung
bilden die Linsen des Abbildungssystems, das aus einer
Anzahl zeilenförmig angeordneter zylindrischer Linsen mit
konzentrischem Brechungsindexgradienten (Selfoc-Linsen)
besteht, die Lichtschaltelemente im Verhältnis 1:1 auf den
lichtempfindlichen Aufzeichnungsträger bzw. in die Aufzeichnungsebene ab. Durch den Einsatz derartiger Linsen mit einem Abbildungsverhältnis von 1 : 1 lassen sich die Kosten für einen optischen Druckkopf der genannten Art erheblich vermindern, da es sich bei diesen Linsen um Massenartikel handelt.

Die Lichtschaltelemente eines derartigen Druckkopfes können beispielsweise aus magneto-optisch aktivem Material, aus piezoelektrischer Keramik oder aus Flüssigkristall-Elementen bestehen, die von hinten mittels einer zeilenförmigen Beleuchtungseinrichtung beleuchtet werden. Die Lichtschaltelemente können aber auch Leuchtdioden einer auf einem Substrat integrierten Diodenzeile sein. In diesem Fall ist eine zusätzliche Beleuchtungseinrichtung nicht erforderlich.

Die Zeichnung stellt Ausführungsbeispiele der Erfindung dar. Es zeigen:

Fig. 1 den prinzipiellen Aufbau eines bekannten optischen Druckers mit magneto-optischen Lichtschaltelementen,

Fig. 2 den speziellen Aufbau eines optischen Druckers gemäß der Erfindung in Seitenansicht,

Fig. 3 eine Lichtleiterplatte mit eingelegten optischen Fasern als lichtleitende Kanäle,

Fig. 4 eine Lichtleiterplatte mit innenverspiegelten Hohlkanälen und einer sie abdeckenden Spiegelplatte

Fig. 5 eine Lichtleiterplatte mit eindiffundierten lichtleitenden Kanälen,

Fig. 6 eine Lichtleiterplatte mit aufgeprägten Lichtleitkanälen und

Fig. 7 eine spezielle Anordnung zweier aufeinander liegender
        Lichtleiterplatten.


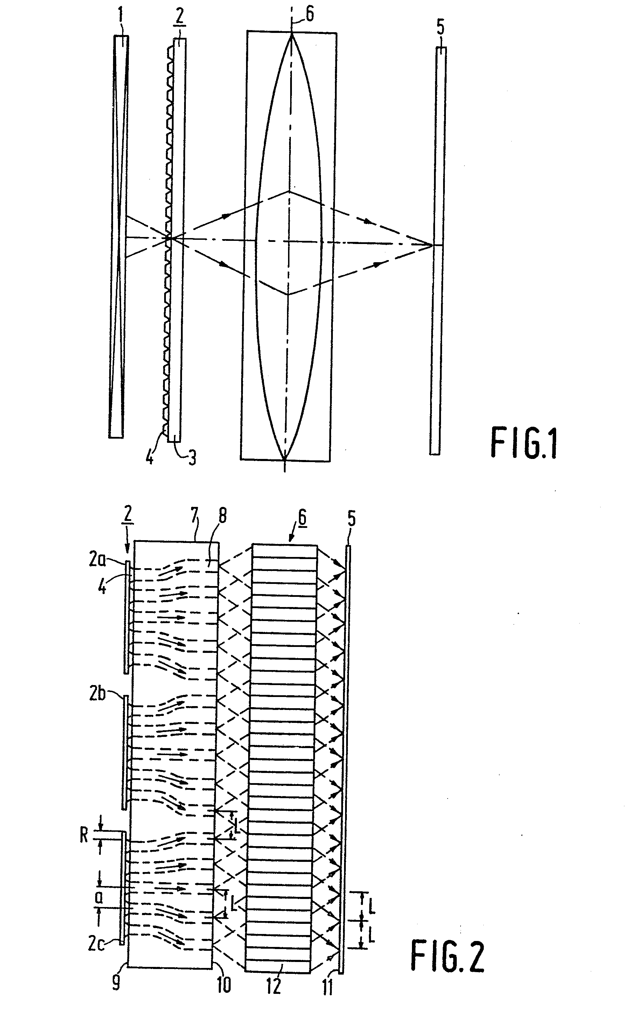

In Fig. 1 ist der prinzipielle Aufbau eines bekannten
optischen Druckers dargestellt. Er enthält eine linienförmige Lichtquelle 1, der eine Lichtschaltmaske 2 vorgelagert ist, die aus einem Festkörperträger 3 besteht, auf
dem eine Zeile von magneto-optischen Lichtschaltelementen 4
angeordnet ist. Eine solche Lichtschaltmaske 2 kann beispielsweise aus einer runden Festkörperscheibe hergestellt
werden, auf der in quadratischer Aufteilung eine Vielzahl
von Lichtschaltelementen in bekannter Weise erzeugt wird,
und die anschließend in Streifen entlang der Seitenlinien
der Quadrate zersägt wird.


Zwischen dem Aufzeichnungsträger 5 und der Lichtschaltmaske 2 ist ein optisches Abbildungssystem 6 zur Abbildung
der durch die Lichtschaltelemente 4 erzeugten Bildmuster auf
den Aufzeichnungsträger 5 angeordnet. Durch dieses Abbildungssystem 6 wird somit für jedes angesteuerte Lichtschaltelement 4 ein entsprechender Bildpunkt auf dem Aufzeichnungsträger 6 erzeugt. Die Abstände dieser Bildpunkte
voneinander entsprechen damit den Abständen der Lichtschaltelemente 4 innerhalb der Lichtschaltmaske 2.


Die Fig. 2 zeigt dagegen einen optischen Druckkopf nach der
Erfindung für einen optischen Drucker. Die Lichtschaltmaske 2 besteht hier aus mehreren Teil-Lichtschaltmasken 2a,
2b, 2c, deren Lichtschaltelemente 4, die z.B. magneto-optische Schaltelemente oder Leuchtdioden sein können, entlang
einer Linie bzw. Zeile angeordnet sind. Die Lichtschaltelemente sind innerhalb einer jeden Teil-Lichtschaltmaske
2a, 2b, 2c in Zeilenrichtung unter dem Rastermaß a angeordnet. Der Abstand des letzten Lichtschaltelementes 4 einer
Teil-Lichtschaltmaske zum ersten Lichtpunkt der nächsten
Teil-Lichtschaltmaske beträgt mindestens 2R $>$ a. Dies ist, wie bereits erwähnt, durch die Herstellung der Teil-Lichtschaltmasken 2a, 2b, 2c bedingt. Für den Fall, daß es sich
bei den Lichtschaltelementen 4 um magneto-optische Schaltelemente handelt, ist parallel zur Zeile der Schaltelemente
eine linienförmige Lampe 1 angeordnet, die diese Schaltelemente von hinten beleuchtet (in Fig. 2 nicht dargestellt). Werden als Lichtschaltelemente 4 selbstleuchtende
Dioden (LED's) verwendet, entfällt natürlich eine derartige Beleuchtungseinrichtung.

Am Ausgang der Lichtschaltmaske 2 bzw. der Teil-Lichtschaltmasken 2a, 2b, 2c ist eine Lichtleiterplatte 7 angeordnet.
Diese enthält lichtleitende Kanäle 8, welche das aus den
Lichtschaltelementen 4 austretende Licht durch Lichtleitung
von der Ebene 9 zur Ebene 10 führen, wobei die Ausgänge der
lichtleitenden Kanäle 8 in der Ebene 10 in äquidistanten
Abständen L angeordnet sind, während ihre Abstände in der
Ebene 9 dem Rastermaß a der Lichtschaltelemente 4 bzw. dem
Abstand zweier nebeneinander liegender Lichtschaltelemente 4
von benachbarten Teil-Lichtschaltmasken 2a, 2b bzw. 2b, 2c
angepaßt sind.

An den Ausgang der Lichtplatte 7 schließt sich das Abbildungssystem 6 an, das die Ausgänge der lichtleitenden
Kanäle 8 aus der Ebene 10 in die Aufzeichnungsebene 11 abbildet, in der der Aufzeichnungsträger 5 liegt. In der Aufzeichnungsebene 11, z.B. der Papierebene des Druckers, entsteht somit, wie in der Ebene 10, eine Linie von äquidistanten Lichtpunkten mit dem gegenseitigen Abstand L (Rastermaß). In der Praxis liegt das Rastermaß L in der Größenordnung von 40 bis 100 µm. Die Größe der Lichtschaltelemente 4 in den Lichtschaltmasken beträgt demnach bis zu
100 x 100 µm$^2$. Damit ergeben sich Durchmesser für die lichtleitenden Kanäle 8 innerhalb der Lichtleiterplatte 7, die in
der Größenordnung von optischen Lichtleitfasern aus Glas oder Kunststoff liegen. Das Abbildungssystem 6 besteht aus einer zeilenförmigen Anordnung von Glaszylindern 12, die in Richtung ihrer Zylinderachse durchstrahlt werden, und in denen jeweils ein konzentrischer Brechungsindexgradient vorhanden ist (sog. Selfoc-Linse). Diese Glaszylinder besitzen einen Durchmesser, der in der Größenordnung von 1 bis 2 mm liegt.

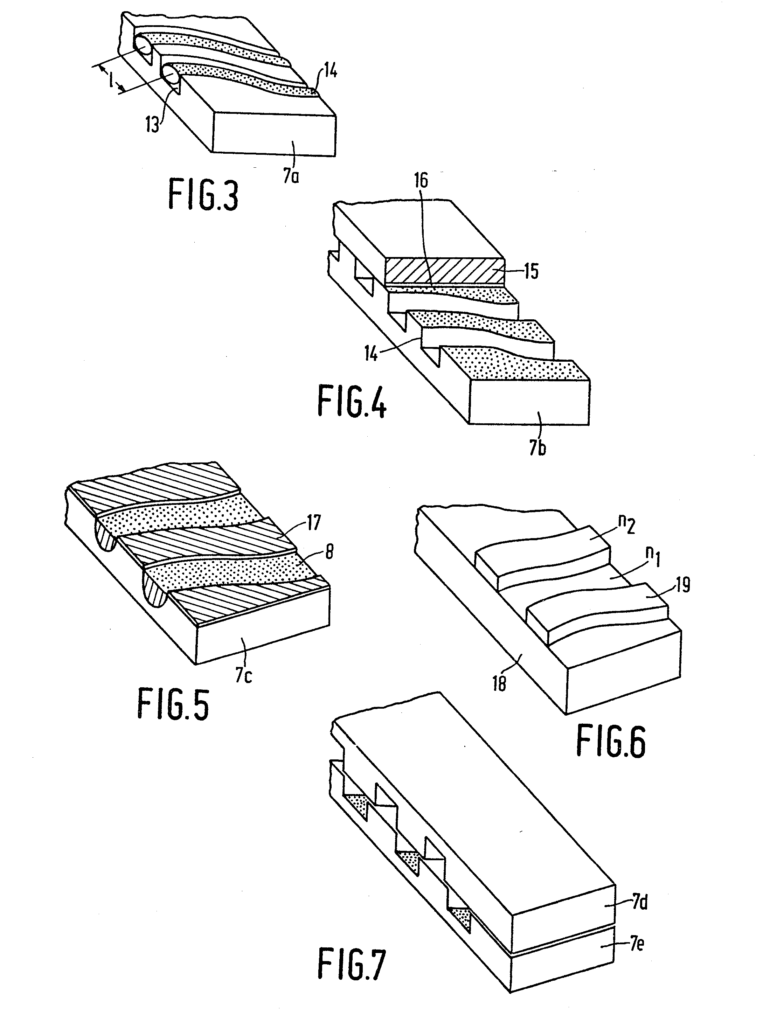

Eine Lichtleiterplatte 7 kann somit z.B. nach der Fig. 3 ausgebildet sein. Danach sind in die Trägerplatte 7a entsprechend den jeweiligen Abständen der Lichtschaltelemente 4 untereinander und dem Rastermaß L Rillen 13 eingebracht, in die Lichtleitfasern 14 aus Glas oder Kunststoff eingekittet sind. Die Lichtleitfasern 14 können im eingekitteten Zustand sowohl lichteingangs- als auch lichtausgangsseitig optisch geschliffen und poliert sein.

Eine einfachere und damit kostengünstigere Lösung für die Realisierung einer Lichtleiterplatte ist beispielsweise in Fig. 4 dargestellt. Die dort gezeigte Platte 7b besteht aus einem optisch geeigneten Plastikmaterial, in das die Rillenstruktur 14 mit Hilfe einer Muttermaske mit entsprechender Negativstruktur eingedrückt wird. Anschließend wird die Rillenstruktur 14 durch Bedampfung mit Silber, Gold oder Aluminium verspiegelt. Auf der Platte 7b befindet sich eine Spiegelplatte 15, die an ihrer der Platte 7b zugewandten Seite eine Spiegelschicht 16 trägt, die die Rillenstruktur 14 spiegelnd überdeckt, so daß die erforderliche Lichtkanalstruktur entsteht. Eine Lichtkanalstruktur kann auch dadurch erzielt werden, daß die Rillen der gepreßten Kunststoffplatte 7b mit einem optisch transparenten Kunststoff ausgefüllt werden, der einen höheren Brechungsindex als das Material der Platte 7b besitzt. Alternativ kann die Platte 7b auch aus einem Material bestehen, in das die Rillenstruktur 14 eingeätzt werden kann.

Eine andere Möglichkeit zur Realisierung einer Lichtleiterplatte besteht darin, in ein geeignetes transparentes Substrat 7c ein Material über eine Maske 7 mit der gewünschten
Lichtleiterstruktur eindiffundieren zu lassen, wie in Fig. 5
dargestellt. Das Material muß dabei so gewählt werden, daß
der Brechungsindex der Diffusionsbereiche größer ist als der
der Umgebung. In Frage kommen als Substratmaterial z.B.
Glas, in das von außen Ionen eindiffundiert werden, die den
Brechungsindex des Glases erhöhen.

Eine weitere alternative Lösung besteht in dem Aufprägen von
transparenten, lichtleitenden Kanälen mit einem Brechungsindex $n_2$ auf ein dielektrisches Substrat (z.B. Glas) mit dem
Brechungsindex $n_1 < n_2$ entsprechend Fig. 6.

In der Praxis werden häufig Lichtschaltmasken 2 verwendet,
bei denen die Lichtschaltelemente 4 in zwei Zeilen auf Lücke
zueinander versetzt angeordnet sind. Dies hat unter anderem
herstellungstechnische Gründe. Für derartige Lichtschaltmasken 2 kann die Lichtleiterplatte aus zwei aufeinanderliegenden Einzelplatten 7d und 7e bestehen, die versetzt
gegeneinander angeordnet und entsprechend der Figuren 3
bis 6 ausgebildet sind.

Patentansprüche:

Patentansprüche:

1. Optischer Druckkopf, mit entlang einer Zeile gruppenweise angeordneten Lichtschaltelementen, deren gegenseitiger äquidistanter Abstand innerhalb einer Gruppe von demjenigen Abstand zweier benachbarter Lichtschaltelemente nebeneinander liegender Gruppen verschieden ist, und mit einem Abbildungssystem zur zeilenförmigen Abbildung der Lichtschaltelemente auf einen lichtempfindlichen Aufzeichnungsträger, dadurch gekennzeichnet, daß zwischen den Lichtschaltelementen (4) und dem Abbildungssystem (6) eine Lichtleiterplatte (7) mit einer der Anzahl der Lichtschaltelemente entsprechenden Anzahl von lichtleitenden Kanälen (8) angeordnet ist, von denen jeweils einer mit seiner Lichtkanal-Eintrittsfläche einem Lichtschaltelement gegenüberliegt, während die Lichtkanal-Austrittsflächen untereinander einen äquidistanten Abstand (L) besitzen.

2. Optischer Druckkopf nach Anspruch 1, dadurch gekennzeichnet, daß die Lichtleiterplatte (7a) aus einer Rillenplatte besteht, in deren Rillen Lichtleitfasern (14) aus Glas oder Kunststoff als lichtleitende Kanäle eingelegt sind.

3. Optischer Druckkopf nach Anspruch 1, dadurch gekennzeichnet, daß die Lichtleiterplatte (7b) als lichtleitende Kanäle innenverspiegelte Hohlkanäle (14) besitzt, die durch eine Spiegelplatte (5) abgedeckt sind.

4. Optischer Druckkopf nach Anspruch 2 oder 3, dadurch gekennzeichnet, daß die Lichtleiterplatte (7, 7a, 7b) aus Kunststoff besteht und die Rillen (13) bzw. Hohlkanäle (14) in den Kunststoff eingepreßt sind.

5. Optischer Druckkopf nach Anspruch 2 oder 3, dadurch gekennzeichnet, daß die Lichtleiterplatte (7, 7a, 7b) aus einem Substrat besteht, in das die Rillen (13) bzw. Hohlkanäle (14) auf fotolithografischem Wege durch Ätzen eingebracht sind.

6. Optischer Druckkopf nach Anspruch 1, dadurch gekennzeichnet, daß die Lichtleiterplatte aus einem dielektrischen Material als Träger (18) besteht und darauf Lichtleitkanäle (19) aus einem transparenten Material aufgeprägt werden.

7. Optischer Druckkopf nach Anspruch 1, dadurch gekennzeichnet, daß die Lichtleiterplatte (7c) aus einem Substrat besteht, in das die lichtleitenden Kanäle (8) durch Diffusion eines Materials mit hohem Brechungsindex eingebracht sind.

8. Optischer Druckkopf nach einem oder mehreren der Ansprüche 1 bis 7, dadurch gekennzeichnet, daß das Abbildungssystem (6) aus einer Anzahl zeilenförmig angeordneter zylindrischer Linsen (12) mit konzentrischem Brechungsindexgradienten (Selfoc-Linsen) besteht.

9. Optischer Druckkopf nach Anspruch 8, dadurch gekennzeichnet, daß die Linsen (12) so ausgebildet sind, daß sie im Verhältnis 1 : 1 abbilden.

10. Optischer Druckkopf nach einem oder mehreren der Ansprüche 1 bis 9, dadurch gekennzeichnet, daß die Lichtschaltelemente (4) aus magneto-optisch aktivem Material bestehen.

11. Optischer Druckkopf nach einem oder mehreren der Ansprüche 1 bis 9, dadurch gekennzeichnet, daß die Lichtschaltelemente (4) aus piezoelektrischer Keramik bestehen.

12. Optischer Druckkopf nach einem oder mehreren der Ansprüche 1 bis 9, dadurch gekennzeichnet, daß die Lichtschaltelemente (4) aus Flüssigkristallelementen bestehen.

13. Optischer Druckkopf nach einem der Ansprüche 10 bis 12, dadurch gekennzeichnet, daß die Lichtschaltelemente (4) durch eine zeilenförmige Beleuchtungseinrichtung (1) von hinten beleuchtet sind.

14. Optischer Druckkopf nach einem oder mehreren der Ansprüche 1 bis 9, dadurch gekennzeichnet, daß die Lichtschaltelemente (4) Leuchtdioden einer auf einem Substrat integrierten Diodenzeile sind.

15. Optischer Drucker, mit einem optischen Druckkopf sowie elektronischen Mitteln zum Ansteuern der Lichtschaltelemente des Druckkopfes, dadurch gekennzeichnet, daß der optische Druckkopf nach einem oder mehreren der Ansprüche 1 bis 14 ausgebildet ist.

0131320

FIG.1

FIG.2

1-Ⅱ-PHD  83-063

FIG.3

FIG.4

FIG.5

FIG.6

FIG.7

Europäisches
Patentamt

**EUROPÄISCHER RECHERCHENBERICHT**

**0131320**
Nummer der Anmeldung

EP 84 20 0815

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | EP-A-0 051 886 (AGFA-GEVAERT) * Figuren 1-3; Seite 2, letzter Absatz - Seite 4, Absatz 5; Seiten 6-8 * | 1,9-15 | G 06 K 15/12 H 04 N 1/036 |
| Y | | 2,3,5, 7,8 | |
| | --- | | |
| Y | EP-A-0 025 957 (SIEMENS A.G.) * Figuren 1-6; Seite 2, Zeile 22 - Seite 3, Zeile 18; Seite 5, Zeile 12 - Seite 8, Zeile 15 * | 1,2,5, 14,15 | |
| | --- | | |
| Y | EP-A-0 071 304 (N.V. PHILIPS'GLOEILAMPENFABRIEKEN) * Figuren 1-4; Seite 2, Zeile 7 - Seite 3, Zeile 11; Seite 5, Zeile 14 - Seite 6, Zeile 2 * | 2,3,5, 7 | |
| | | | RECHERCHIERTE SACHGEBIETE (Int. Cl. ³) |
| | --- | | |
| Y | WO-A-8 204 353 (PURDY) * Figuren 1-5; Zusammenfassung; Seite 7, Zeilen 12-26; Seite 13, Zeile 29 - Seite 15, Zeile 27 * | 1,8,14 ,15 | G 06 K H 04 N |
| | --- | | |
| A | DE-A-2 711 194 (STANDARD ELEKTRIK LORENZ AG.) * Figur; Ansprüche * | 1,11, 13,14, 15 | |
| | --- -/- | | |

Der vorliegende Recherchenbericht wurde für alle Patentansprüche erstellt.

| Recherchenort DEN HAAG | Abschlußdatum der Recherche 27-09-1984 | Prüfer PESCHEL W. |
|---|---|---|

Europäisches
Patentamt

**EUROPÄISCHER RECHERCHENBERICHT**

EP  84 20 0815

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| P,A | EP-A-0 098 013  (PHILIPS PATENTVERWALTUNG) & DE - A - 3 224 356 (Kat. D) | 1 | |
| A | GB-A-2 017 590  (N.V. PHILIPS'GLOEILAMPENFABRIEKEN) * Seite 1, Zeilen 56-60 * & DE - A - 2 812 206 (Kat. D ) | 1,13 | |

RECHERCHIERTE
SACHGEBIETE (Int. Cl. ³)

Der vorliegende Recherchenbericht wurde für alle Patentansprüche erstellt.

| Recherchenort DEN HAAG | Abschlußdatum der Recherche 27-09-1984 | Prüfer PESCHEL W. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument